(19) Europäisches Patentamt
European Patent Office
Office européen des brevets

(11) **EP 3 356 030 B1**

(12) **FASCICULE DE BREVET EUROPEEN**

(45) Date de publication et mention
de la délivrance du brevet:
**12.01.2022 Bulletin 2022/02**

(21) Numéro de dépôt: **16785225.0**

(22) Date de dépôt: **27.09.2016**

(51) Int Cl.:
*B01J 20/283* (2006.01)     *B01J 20/285* (2006.01)
*B01J 20/30* (2006.01)     *B01J 20/28* (2006.01)
*B01D 15/08* (2006.01)

(86) Numéro de dépôt international:
**PCT/FR2016/052447**

(87) Numéro de publication internationale:
**WO 2017/055729 (06.04.2017 Gazette 2017/14)**

(54) **PROCÉDÉ DE FABRICATION D'UN GARNISSAGE POREUX POUR LA CHROMATOGRAPHIE**

VERFAHREN ZUR HERSTELLUNG EINER PORÖSEN CHROMATOGRAPHIEPACKUNG

METHOD OF MANUFACTURE OF A POROUS PACKING FOR CHROMATOGRAPHY

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **29.09.2015 FR 1559198**

(43) Date de publication de la demande:
**08.08.2018 Bulletin 2018/32**

(73) Titulaire: **Parmentier, François
38400 Saint Martin d'Héres (FR)**

(72) Inventeur: **Parmentier, François
38400 Saint Martin d'Héres (FR)**

(74) Mandataire: **Regimbeau
87, rue de Sèze
69451 Lyon Cedex 06 (FR)**

(56) Documents cités:
**WO-A1-2016/050789     WO-A1-2016/050797
WO-A2-2011/114017     US-A- 5 234 594
US-A1- 2008 026 188**

**Description**

**DOMAINE DE L'INVENTION**

La présente invention concerne un procédé de fabrication d'un garnissage poreux pour la chromatographie, faisant intervenir l'étirage d'un faisceau de fibres.

**ARRIERE PLAN DE L'INVENTION**

Le contact intime entre deux phases comme un gaz et un liquide pour promouvoir leur interaction chimique ou physique est une opération importante du génie chimique.

Afin de réaliser des colonnes chromatographiques très efficaces et permettant des analyses rapides, on a proposé des garnissages multicapillaires. On trouvera un exemple de tels garnissages décrits dans la demande de brevet WO 2011/114017.

On sait que la hauteur d'un plateau théorique pour un tel garnissage est de l'ordre du diamètre des conduits.

Il ressort le besoin de fabriquer des garnissages dont le diamètre des conduits soit le plus fin possible afin d'obtenir les efficacités les plus élevées possibles.

Le brevet US N° 5,234,594 de Tonucci et al. décrit une méthode de fabrication de filtres par étirage de barreaux de verre constitués d'un cœur soluble dans un acide, gainé par une enveloppe inerte et insoluble. Le procédé de création des conduits consiste à dissoudre le coeur dans une solution aqueuse d'un acide en faisant progresser la réaction à partir de l'embouchure des conduits. De cette façon, seuls des garnissages de très courte longueur peuvent être obtenus. De plus, la paroi des conduits, obtenue à partir de verre Corning 0120 qui est un verre au plomb, est pleine et non poreuse comme en témoignent les photographies et le procédé de fabrication.

Un tel filtre n'est donc pas adapté à la mise en œuvre d'un procédé de chromatographie.

Le document US 2008/0026188 décrit un procédé de fabrication d'un objet par étirage en vue de former des conduits au sein d'une matrice de verre poreuse. Toutefois, cet objet n'est ni destiné ni même adapté à la chromatographie.

**BREVE DESCRIPTION DE L'INVENTION**

Un but de l'invention est de concevoir un procédé de de fabrication d'un garnissage poreux pour la chromatographie présentant une efficacité améliorée.

L'objet de l'invention concerne un procédé de fabrication d'un garnissage poreux multicapillaire pour la chromatographie selon les revendications annexées.

Par « connexe », on entend le fait que les pores communiquent entre eux.

**BREVE DESCRIPTION DES DESSINS**

D'autres caractéristiques et avantages de l'invention ressortiront de la description détaillée qui va suivre, en référence aux dessins annexés sur lesquels :

- la figure 1 est une vue en coupe axiale du procédé d'étirage selon l'invention ;
- la figure 2 est un schéma décrivant les étapes d'un procédé selon l'invention ;
- la figure 3 est une vue en coupe radiale d'un produit obtenu par un procédé suivant l'invention.
- la figure 4 montre la relation entre NEPT (nombre de plateaux théoriques) et longueur du garnissage pour des monolithes poreux multicapillaires et des monolithes multicapillaires non poreux.
- Les figures 5 et 6 explicitent les deux variantes de réalisation d'un procédé chromatographique.
- La figure 7 représente schématiquement une simulation sur ordinateur de la séparation de deux espèces chimiques sur un garnissage multicapillaire à parois poreuses dont le diamètre des pores communicantes est supérieur à deux fois le diamètre moléculaire de ces espèces.
- La figure 8 représente schématiquement une simulation sur ordinateur de la séparation des mêmes espèces chimiques sur un garnissage présentant des caractéristiques dimensionnelles identiques mais dont le diamètre des pores communicantes est supérieur à deux fois le diamètre moléculaire de l'une de ces espèces.
- La figure 9 représente des réponses chromatographiques d'une même colonne dans le cas où la molécule éluée est d'un diamètre moléculaire inférieur à deux fois le diamètre des pores permettant la diffusion entre les conduits adjacents (courbe en pointillés), et dans le cas ou son diamètre moléculaire, supérieur à deux fois le diamètre des pores, ne le permet pas (courbe en trait plein), la colonne contient des conduits dont les diamètres sont répartis aléatoirement suivant une loi gaussienne dont l'écart type correspond à 5% du diamètre moyen des conduits.

## DESCRIPTION DETAILLEE DE L'INVENTION

Il est divulgué un procédé de chromatographie, dans lequel on fait circuler une phase mobile gazeuse, liquide ou supercritique contenant des substances à séparer au travers d'un garnissage poreux comprenant une pluralité de conduits capillaires s'étendant dans la direction de circulation de ladite phase mobile,

ledit garnissage étant fabriqué par un procédé dans lequel :

- on assemble un faisceau de fibres élémentaires, lesdites fibres comprenant un cœur en un matériau solide, liquide ou gazeux, et une enveloppe en un matériau étirable,
- on étire ledit faisceau de façon à réduire le diamètre desdites fibres,
- on réalise une matrice poreuse autour du cœur des fibres étirées, la réalisation de ladite matrice poreuse comprenant une transformation du matériau d'enveloppe,

ladite matrice poreuse comprenant au moins une population de pores connexes reliant entre eux les conduits, l'épaisseur de matrice poreuse entre deux conduits adjacents étant inférieure au diamètre des conduits, de manière préférée inférieure à la moitié du diamètre des conduits,

- le cas échéant, on élimine le matériau de cœur de façon à laisser des conduits libres dans la matrice poreuse.

On distingue deux catégories générales de procédé chromatographique, la chromatographie d'élution et la chromatographie d'affinité.

Avantageusement il est fait appel à un procédé de chromatographie d'élution.

La chromatographie d'élution peut être conduite par toute technique connue, comme par exemple la chromatographie discontinue sur colonne, la chromatographie annulaire continue radiale ou axiale, le lit mobile simulé.

Avantageusement, le procédé chromatographique mis en œuvre pourra être un procédé de chromatographie d'affinité.

De préférence, ledit procédé comprend au moins l'une des caractéristiques suivantes, et de manière encore préférée une combinaison desdites caractéristiques :

- les pores ont un diamètre supérieur à deux fois le diamètre moléculaire des substances à séparer,

l'épaisseur de matrice poreuse entre deux conduits adjacents est inférieure au diamètre des conduits, et
le diamètre moyen des conduits est inférieur à 30 $\mu$m.

En effet un garnissage chromatographique multicapillaire doit présenter pour avoir une haute efficacité un diamètre de conduit constant à l'intérieur d'un même conduit et entre les différents conduits, une épaisseur de paroi constante et un parcours le plus linéaire et le plus rectiligne possible.

Pour la même raison les parois internes séparant les conduits doivent être poreuses vis-à-vis des molécules à séparer.

Avantageusement la taille des pores du milieu des parois est supérieure à 2 fois le diamètre moléculaire des espèces à séparer.

En phase condensée la gêne stérique à la diffusion provoquée par les pores se calcule

$$C = K_p * K_r$$

par la formule (Deen, 1987) : Avec

$$K_p = (1 - \lambda)^2$$

Et

$$K_r = 1 - 2.104 * \lambda + 2.089 * \lambda^2 - 0.948 *$$

$$\lambda = \frac{R_h}{r_0}$$

$R_h$ (en $\mu$m) est le rayon moléculaire de la molécule d'espèce à séparer considérée comme une sphère et $r_0$ (en $\mu$m) le rayon des pores.

$K_p$ est un facteur tenant compte d'un écart de la concentration à l'équilibre entre les pores et le milieu infini.

$K_r$ prend en compte les gènes stériques des molécules à séparer dans le volume des pores.

C est le facteur de réduction de la diffusivité en milieu libre à appliquer pour obtenir la diffusivité dans les pores.

On constate ainsi que le facteur C devient inférieur à 0,1 pour un rapport $\lambda$ de 0,5, correspondant à une taille ou diamètre de pore inférieure à 2 fois le diamètre de la molécule d'espèce à séparer. On perd un ordre de grandeur sur la diffusivité effective, qui devient prohibitivement basse, et l'efficacité de la séparation devient mauvaise.

Le tableau suivant calcule le facteur C pour différentes molécules et différentes tailles de pore.

| molécule | Rh (nm) | ro(nm) | $\lambda$ | Kp | Kr | C |
|---|---|---|---|---|---|---|
| organique | 0,15 | 0,3 | 1 | 0,00 | 0,04 | 0,00 |
| organique | 0,15 | 0,6 | 0,5 | 0,25 | 0,35 | 0,09 |
| organique | 0,15 | 1 | 0,3 | 0,49 | 0,53 | 0,26 |
| organique | 0,15 | 2 | 0,15 | 0,72 | 0,73 | 0,53 |
| organique | 0,15 | 4 | 0,075 | 0,86 | 0,85 | 0,73 |
| organique | 0,15 | 6 | 0,05 | 0,90 | 0,90 | 0,81 |
| organique | 0,15 | 10 | 0,03 | 0,94 | 0,94 | 0,88 |
| protéine | 1,5 | 6 | 0,5 | 0,25 | 0,35 | 0,09 |
| protéine | 1,5 | 10 | 0,3 | 0,49 | 0,53 | 0,26 |
| protéine | 1,5 | 30 | 0,1 | 0,81 | 0,81 | 0,66 |
| protéine | 1,5 | 100 | 0,03 | 0,94 | 0,94 | 0,88 |
| macromolécule | 5 | 30 | 0,33 | 0,44 | 0,50 | 0,22 |
| macromolécule | 5 | 100 | 0,10 | 0,81 | 0,81 | 0,66 |
| macromolécule | 5 | 300 | 0,03 | 0,93 | 0,93 | 0,87 |

En phase gaz la diffusion devient gênée lorsque le flux diffusif entre en écoulement de Knudsen. Ceci survient lorsque le libre parcours moyen des molécules devient de l'ordre de ou supérieur au diamètre des pores.

La diffusivité de Knudsen s'écrit :

$$D_{KA} = \frac{d_{pore}}{3} * \sqrt{\frac{8 * \kappa * N_{av} * TK}{\Pi * M_A}}$$

Lorsque la diffusivité de Knudsen et la diffusivité moléculaire sont en compétition, on écrit :

$$\frac{1}{D_{Ae}} = \frac{1}{D_{KA}} + \frac{1 - \alpha * y_A}{D_{AB}}$$

Avec

$$\alpha = 1 + \frac{N_B}{N_A}$$

En général on simplifie cette formule par :

4

$$\frac{1}{D_{Ae}} = \frac{1}{D_{KA}} + \frac{1}{D_{AB}}$$

Le coefficient C s'en déduit

$$C = \frac{D_{AB}}{D_{AB}} = \frac{D_{KA}}{D_{AB} + D_{KA}}$$

Dans ces formules on note :

$D_{KA}$ : diffusivité de Knudsen, $m^2/s$
$D_{AB}$ : diffusivité moléculaire, $m^2/s$
$D_{Ae}$ : diffusivité en régime intermédiaire, $m^2/s$
TK : température absolue, Kelvin
$M_A$ : masse molaire du composant A, kg/mole
`·` : constante de Boltzmann, MKSA
$N_{av}$ : nombre d'Avogadro
$d_{pore}$ : diamètre des pores, m

Par ailleurs, un garnissage pour la chromatographie sera d'autant plus efficace et productif que les conduits seront fins.

Le procédé de fabrication par étirage répond point par point à ce cahier des charges.

Avantageusement les conduits capillaires présentent une section uniforme les uns par rapport aux autres et sur leur longueur.

On définira commodément la variabilité de section des conduits par un écart type relatif. Cet écart type relatif représente le rapport de l'écart type du diamètre des conduits sur le diamètre moyen des conduits, exprimé en pourcentage. Avantageusement les conduits présentent un diamètre moyen substantiellement constant d'un conduit à l'autre, tel que l'écart type du diamètre sur l'échantillon de conduits du garnissage ne dépasse pas 10% du diamètre moyen, de préférence ne dépasse pas 2% du diamètre moyen, et encore plus préférentiellement ne dépasse pas 0,5 % du diamètre moyen. Dans le présent texte, on entend par moyenne d'un ensemble de valeurs d'une variable X sa moyenne arithmétique E[X]. L'écart type est défini comme la racine carrée de la moyenne arithmétique de $(X\text{-}E[X])^2$. Par distribution, on entend dans le présent texte un ensemble de valeurs de la variable X.

Avantageusement le diamètre ne varie pas de plus de 10% sur la longueur d'un même conduit. Avantageusement, le diamètre ne varie de préférence pas de plus de 5% sur la longueur d'un même conduit. Encore plus avantageusement le diamètre ne varie pas de plus de 2% sur la longueur d'un même conduit. De manière encore préférée le diamètre ne varie pas de plus de 0,5% sur la longueur d'un même conduit.

Avantageusement les conduits présentent une épaisseur moyenne de phase stationnaire substantiellement constante d'un conduit à l'autre, tel que l'écart type de l'épaisseur sur l'échantillon de conduits du garnissage ne dépasse pas 10% de l'épaisseur moyenne, de préférence ne dépasse pas 4% de l'épaisseur moyenne, et encore plus préférentiellement ne dépasse pas 1,0 % de l'épaisseur moyenne.

Avantageusement, on étire le faisceau après l'avoir inséré dans un tube définissant une paroi du garnissage final. Avantageusement cette paroi est étirée en même temps que le faisceau et reste pleine et non poreuse lors des étapes suivantes du procédé.

Cette paroi peut être constituée avantageusement d'un verre sodocalcique, d'un verre au plomb, de silice pure, ou d'un polymère.

On notera que selon l'invention la porosité générée par les conduits capillaires est considérée comme distincte de celle du matériau formant la structure et les parois du matériau, qui est lui-même poreux. Par un procédé de fabrication d'un matériau poreux, on entend et considère l'obtention de la porosité des parois.

Par étirage on entend tout procédé permettant de réduire le diamètre du faisceau de fibres. Ce peut être un étirage à chaud, à une température permettant le ramollissement du matériau des fibres.

On sait produire des fibres monofilaments ou des tubes capillaires de 5 à 10 $\mu$m de diamètre. Cependant la fabrication de fibres fines est rendue difficile par leur fragilité et la difficulté de les manipuler. Afin de conserver les avantages de manipulation, de réalisation et de traitement de fibres de diamètre macroscopiques, l'invention propose de les réaliser et de les traiter, puis de les assembler en faisceau comprenant une multiplicité de fibres macroscopiques avant de réduire leur diamètre simultanément par un procédé d'étirage.

On peut ainsi obtenir un grand nombre de filaments microscopiques inclus dans un faisceau multifilament de taille macroscopique qui reste manipulable.

Par filament microscopique on entend en particulier des filaments de diamètre inférieur à 10 $\mu$m, préférentiellement inférieur à 2 $\mu$m, et encore plus préférentiellement inférieur à 0,5 $\mu$m.

Par faisceau macroscopique on entend de préférence un faisceau de diamètre supérieur à 10 $\mu$m, de préférence supérieur à 30$\mu$m, encore plus préférentiellement supérieur à 100 $\mu$m.

Un facteur différenciant essentiel entre les garnissages multicapillaires et les garnissages particulaires vis-à-vis d'un procédé chromatographique réside dans la perte de charge beaucoup plus faible des premiers.

A l'optimum d'efficacité cela signifie aussi qu'un garnissage multicapillaire fonctionnant sous une perte de charge identique à celle d'un garnissage particulaire présentera un nombre de plateaux théoriques 3 à 4 fois plus élevé, et une productivité (en débit/unité de surface de sa section) également 3 à 4 fois plus élevée.

Ces avantages deviennent pertinents lorsque la perte de charge du lit devient un paramètre opératoire sensible nécessitant un outillage spécial pour devoir être imposée.

Elle a donc pour limite basse pour une chromatographie en phase condensée et plus avantageusement en phase liquide la simple hauteur manométrique du lit de phase stationnaire lui-même permettant un écoulement gravitaire. Pour un garnissage multicapillaire cette limite efficace correspond à un diamètre de conduit inférieur à 50 $\mu$m pour les fluides couramment utilisés, et de préférence inférieur à 30 $\mu$m.

En effet la chromatographie s'effectue de façon simple dans des appareils gravitaires, où le poids de la colonne de fluide sur le garnissage provoque son écoulement.

La limite haute du diamètre des conduits capillaires sera obtenue lorsque l'écoulement du fluide à la vitesse permettant l'optimum de l'efficacité du garnissage provoquera une perte de charge égale au poids de la colonne de fluide considérée sur la hauteur du lit.

On sait que pour un garnissage multicapillaire à l'optimum d'efficacité :

$$\frac{V_c * d_c}{D_0} = V_R$$

La loi de Poiseuille s'écrit

$$\Delta P = \frac{32 * \mu * LG * v_c}{d_c^2}$$

La pression provoquée par une hauteur de fluide LG s'écrit

$$\Delta P = \rho * g * LG$$

Il en résulte que :

$$d_{max} = \sqrt[3]{\frac{32 * \mu * D_0 * V_R}{\rho * g}}$$

Le tableau ci-dessous exemplifie $d_{max}$ pour différents liquides courants en chromatographie.

| solvat | $\mu$ (Po) | Do (m2/s) | $V_R$ | | $\rho$ (kg/m3) dmax ($\mu$m) |
|---|---|---|---|---|---|
| Eau | 0,001 | 1E-09 | 5 | 1000 | 25,3869139 |
| Hexane | 0,00031 | 3E-09 | 5 | 659 | 28,4754613 |
| Méthanol | 0,00055 | 2E-09 | 5 | 791 | 28,3363475 |
| Chloroforme | 0,00057 | 2E-09 | 5 | 1480 | 23,2716977 |

$V_R$ est en général compris entre 2 et 5.

On note que la valeur $d_{max}$ est toujours inférieure à 30 $\mu$m.

On pourra prendre de façon simplifiée la valeur de 50 μm, et plus avantageusement de 30 μm, comme seuil de coupure haut du diamètre des conduits permettant de tirer utilement parti des avantages de la chromatographie multicapillaire.

Les fibres étirables présentent une enveloppe servant d'espaceur entre les fibres afin d'éviter que leurs cœurs ne se touchent.

Avantageusement ce matériau d'enveloppe est étirable et son épaisseur se trouve réduite lors du procédé d'étirage des fibres dans les mêmes proportions.

Avantageusement l'épaisseur de matériau d'enveloppe entre deux conduits adjacents est inférieure au diamètre des conduits, et encore plus préférentiellement inférieure à la moitié du diamètre des conduits.

De façon préférentielle pour une application analytique l'épaisseur de matériau d'enveloppe entre deux conduits adjacents est inférieure au cinquième du diamètre des conduits.

On minimise ainsi les obstacles diffusionnels entre deux conduits vis-à-vis des molécules à séparer et l'on permet à la séparation de s'effectuer avec une haute efficacité.

Par l'épaisseur de matériau d'enveloppe entre deux conduits adjacents, on entend l'épaisseur dudit matériau mesurée sur une corde reliant deux conduits adjacents centre à centre.

Le but final du procédé de fabrication est de créer des conduits dans une matrice poreuse. Il convient dans ce but de faire disparaitre les filaments et de générer une porosité dans le matériau d'enveloppe.

Le procédé de fabrication par étirage est particulièrement adapté à réaliser des conduits de très faible diamètre.

Les garnissages obtenus suivant ce procédé de fabrication ont des conduits d'un diamètre avantageusement inférieur à 30 μm, de préférence inférieur à 5 μm, et de façon encore préférentielle inférieur à 2 μm.

Les garnissages obtenus suivant ce procédé de fabrication ont une longueur comprise de préférence entre quelques mm et plusieurs dizaines de cm, ou plusieurs mètres.

On conçoit donc qu'il puisse être difficile d'attaquer les filaments à partir des extrémités du faisceau pour les détruire. On choisira donc en particulier de faire disparaitre les filaments et de créer la porosité des parois sur toute la longueur du matériau final et avantageusement au travers de sa périphérie. Dans ce cas, il est avantageux de réaliser ou de rendre poreux en premier lieu le matériau formant l'enveloppe des fibres. En particulier des réactifs ou des solvants peuvent ainsi pénétrer jusqu'au cœur du faisceau multifilament macroscopique par diffusion au travers de la connexité de la porosité.

Suivant une voie de réalisation de l'invention, on utilise comme matériau de cœur un gaz. Dans ce cas le fil élémentaire sera un tube capillaire. L'étirage est conduit sur un faisceau de tels tubes de façon à réduire leur diamètre sans effondrement de leur conduit interne.

Le développement de la porosité du matériau d'enveloppe peut avoir lieu avantageusement en faisant circuler un réactif ou un solvant dans les conduits libres obtenus.

Suivant une autre voie de réalisation de l'invention, on utilise comme matériau de cœur un verre soluble dans un acide (de type EG1 ou EG3 en général), et comme verre d'enveloppe un verre borosilicaté susceptible de transformation spinodale. Cependant le grand coefficient de dilatation thermique du verre tel que l'EG1 ($91,2 \cdot 10^{-6}$) comparé à celui d'un verre borosilicaté ($33 \cdot 10^{-6}$) limite un tel procédé à des conduits de petite taille relativement à l'épaisseur du matériau d'enveloppe pour des raisons de solidité mécanique (rupture des assemblages des deux verres lors du chauffage). On se limitera en pratique à une épaisseur de silice poreuse entre deux conduits supérieure à deux fois le diamètre des conduits.

Suivant une autre voie de réalisation de l'invention, on utilise comme matériau de cœur un matériau fusible à une température inférieure à une température provoquant la déformation du faisceau, telle qu'une température de fluage d'un verre ou d'un polymère.

Avantageusement le matériau de cœur des fibres est en un matériau étirable comme un verre, un polymère ou un métal.

On stabilise de ce fait le volume interne aux conduits et l'on limite les risques d'effondrement et de bouchage.

En particulier on utilise de préférence des matériaux de cœur mouillant bien le matériau d'enveloppe.

Dans le cas où le matériau d'enveloppe est un verre on utilise de préférence, pour le matériau de cœur, de l'indium ou un alliage contenant de l'indium.

Avantageusement le matériau de cœur est liquide à la température d'étirage du faisceau, et solide à la température ambiante ou à toute autre température choisie pour le procédé.

On maintient le cœur solide aux deux extrémités du faisceau en cours d'étirage en les maintenant à une température adaptée, de façon à ce que le volume offert au matériau de cœur fondu soit précisément dosé et identique dans chaque capillaire. Ces deux extrémités solides font office de bouchon.

Un usage important de ces garnissages consiste à réaliser des séparations chromatographiques sur des molécules et des liquides destinés à la consommation humaine ou animale. Il s'agit en particulier d'eau potable, de médicaments, d'adjuvants alimentaires, etc.

Dans un tel cas de figure, tous les éléments et composants du garnissage doivent être compatibles avec des contraintes sanitaires strictes. En particulier il est important d'éviter toute pollution du garnissage par des résidus toxiques du procédé de fabrication, et d'éviter autant que possible l'utilisation d'intermédiaires de fabrication toxiques.

En effet des résidus de ces métaux peuvent subsister dans le garnissage et polluer les espèces qui y seront traitées, ou se répandre dans la nature après sa destruction.

Parmi les métaux à bas point de fusion figurent essentiellement le plomb, l'étain, le bismuth, le gallium, le mercure, l'argent, le cadmium et l'indium. Le plomb, le cadmium et le mercure étant des métaux lourds nocifs et nuisibles à la santé humaine et animale et à l'environnement, on choisit de préférence des alliages ne contenant pas ces éléments et basés sur de l'étain, du bismuth, de l'indium, du gallium, de l'argent ou d'une quelconque association de ceux-ci entre eux ou avec d'autres métaux moins fusibles.

En particulier il peut s'agir d'un mélange de bismuth et d'étain. Il existe en particulier un mélange eutectique de ces métaux comportant 58% en poids de bismuth, 42% en poids d'étain, et fondant à 138 °C.

De manière alternative, il peut s'agir d'alliages métalliques à base d'indium. Parmi ces alliages d'indium on utilise de préférence un alliage d'indium à 52% et d'étain à 48% en poids, fondant à 118°C. On peut aussi utiliser un alliage de Bismuth à 32,5%, d'indium à 51% et d'étain à 16,5% en poids, fondant à 60°C.

Avantageusement le solide et le liquide auront la même densité lors de leur fusion.

La fusion du bismuth s'accompagne d'un retrait volumique. En revanche, la fusion de l'Indium et en général des autres métaux s'effectue avec une expansion volumique.

On pourra donc obtenir une absence de variation volumique à la fusion ou toute variation voulue en mélangeant du bismuth, de l'indium et éventuellement d'autres métaux.

Le matériau de cœur fondu à une température inférieure à la température de fluage ou de dégradation du matériau d'enveloppe est éliminé facilement par écoulement hors du faisceau et de la matrice de matériau d'enveloppe après étirage du faisceau.

Le développement de la porosité du matériau d'enveloppe peut avoir lieu avantageusement après cette étape d'élimination du cœur fondu. On pourra en particulier faire circuler un réactif ou un solvant dans les conduits laissés libres par la disparition du matériau de cœur.

Parmi les matériaux fusibles utilisables pour constituer le matériau de cœur, on notera en particulier les cires, les paraffines, les polyméres fusibles en des liquides de faible viscosité tels que les PolyEthyleneGlycols de bas poids moléculaire, l'acide polylactique, etc...

Parmi les cires on mentionnera la cire de Carnauba, la cire d'abeille, etc...

Le matériau de cœur peut être éliminé par thermolyse.

Suivant une autre voie de réalisation de l'invention, on utilisera comme matériau de cœur un matériau vitreux, visqueux ou pâteux à la température provoquant la déformation du faisceau et permettant son étirage. Ce peut être en particulier un haut polymère ou un verre.

Selon l'invention, le matériau de l'enveloppe est en un matériau étirable comme un verre.

Avantageusement le matériau de l'enveloppe servira de support ou contiendra une silice poreuse de surface spécifique supérieure à 70 m2/g, et de préférence supérieure à 140 m2/g.

Avantageusement cette silice poreuse aura une surface analogue à celle d'un gel de silice utilisable en chromatographie.

Avantageusement le matériau d'enveloppe présente un volume poreux supérieur à 30% de son volume total, de préférence supérieur à 40% de son volume total, et encore plus préférentiellement supérieur à 50% de son volume total mesuré à l'exclusion du volume des conduits.

Par mesuré à l'exclusion du volume des conduits, on entend le volume poreux des parois poreuses du garnissage séparant les conduits rapporté au poids desdites parois, en ne prenant pas en compte le volume des conduits capillaires dans la porosité.

Avantageusement le matériau poreux contient une charge de particules nanométriques portant la fonction chromatographique dans un liant inerte on non.

On pourra charger la porosité par un matériau de renfort comme une charge solide de granulométrie suffisamment fine pour pénétrer dans la porosité, ou par un procédé sol gel réalisé dans les pores, ou par les deux processus conjointement.

Par granulométrie suffisamment fine on entendra en particulier une taille de particule inférieure à l'épaisseur de paroi du matériau final.

Alternativement la charge solide pourra être occluse dans le matériau secondaire étiré et rendue accessible après génération de sa porosité.

Parmi les charges solides on citera en particulier les gels de silice.

Suivant une voie de réalisation le matériau d'enveloppe est un verre rendu poreux.

Les verres borosilicatés en particulier permettent de créer en leur sein une porosité. Cette porosité se développe en deux temps :

- on réalise un recuit à chaud à une température comprise entre de préférence 550 et 600 °C du verre durant une période de plusieurs heures. Le matériau du verre se sépare en deux phases : une phase riche en silice qui assure un continuum, et une phase riche en sodium et en oxyde de bore assurant une seconde connexité.
- on opère une attaque acide aqueuse à chaud du verre recuit, ce qui a pour effet de dissoudre sélectivement la phase riche en oxyde de bore, et de créer une porosité.

On peut donc étirer des fibres dont le matériau d'enveloppe est constitué d'un verre borosilicaté, que l'on rend ultérieurement poreux en faisant subir au faisceau un recuit et une attaque acide.

De façon particulièrement simple ceci peut être réalisé au départ de tubes capillaires en verre borosilicaté assemblés en faisceau et étirés.

Avantageusement ces tubes sont remplis d'un métal fusible avant étirage pour améliorer ce processus.

De façon préférentielle on choisit l'ensemble des conditions opératoires de façon à ce que l'attaque acide se fasse avec une variation de volume du verre minimale.

En effet, l'attaque acide (ou leaching en anglais technique) d'un verre borosilicaté ayant subi une décomposition spinodale se fait avec une variation de volume positive ou négative.

Pour éviter des tensions mécaniques se produisant dans le verre et pouvant amener à sa rupture, on choisit des conditions permettant d'assurer une variation de volume minimale durant cette phase.

De façon préférentielle on choisit un verre borosilicaté à trois composants dont les % molaires varieront dans le domaine suivant :

- $SiO_2$ entre 63 et 75 %
- $Na_2O$ ou $K_2O$ entre 5 et 8%
- $B_2O_3$ entre 20 et 35%

On consultera avantageusement la référence suivante pour la définition de ce domaine :
Phase Separation In Glass, O.V. MAZURIN et E.A. PORAI-KOSHIT, 1984, North Holland éditeur, p. 310.

On consultera également cet ouvrage pour aider à définir les conditions expérimentales permettant de gouverner la taille des pores d'un verre poreux.

Suivant une autre voie de réalisation le matériau de l'enveloppe peut également être constitué d'un polymère thermoplastique étirable ou d'un mélange de ceux-ci.

Parmi les polymères artificiels et synthétiques on citera les:

- Cellulosiques : acétate de cellulose (CA)
- Vinyliques : poly(chlorure de vinyle) (PVC) ; poly(chlorure de vinyle) surchloré (PVC-C) ; poly(acétate de vinyle) (PVAC) ; alcool polyvinylique (PVAL)
- Styréniques : polystyrène (PS) acrylonitrile styrène acrylate (ASA)
- Polyesters saturés : poly(téréphtalate d'éthylène) (PET) ; poly(téréphtalate de butylène) (PBT) ; poly(naphtalate d'éthylène) (PEN) ou insaturés (UP)
- Polyamides (PA) : PA 6, PA 6-6, PA 11, PA 12, PA 4-6, etc.
- Polyuréthanes (PUR) saturés ou réticulés
- Polycarbonate (PC)
- Acryliques : poly(méthacrylate de méthyle) (PMMA) ; polyacrylonitrile (PAN)
- Polyacétals : polyoxyméthylène (POM)
- Silicones (SI)
- Polyimides (PI)
- Halogénés

    ◦ Chlorés : poly(chlorure de vinyle) (PVC) ; poly(chlorure de vinyle) surchloré (PVC-C) ; poly(chlorure de vinylidène) (PVDC)
    ◦ Fluorés : polytétrafluoroéthylène (PTFE), plus connu sous le nom de Téflon™ ; polyfluorure de vinyle (PVF) ; polyfluorure de vinylidène (PVDF) ; éthylène tétrafluoroéthylène (ETFE) ; perfluoroalkoxy (PFA)

- Polydiméthylsiloxane (PDMS)
- Époxydes (EP)
- Thermostables : polyétheréthercétone (PEEK) ; polymère à cristaux liquides (LCP)

Selon l'invention, le matériau d'enveloppe contient un liant et un matériau porogène. Parmi les liants on citera les polymères inertes comme les polyoléfines (polyéthylène, polypropylène,etc...) le PVDF, la famille des téflons (Marque de DuPont de Nemours) et particulièrement les téflons amorphes (téflon AF de DuPont) le nylon, le PMMA, etc...

Parmi les matériaux porogènes on citera les solvants organiques lourds ou légers, les polymères, les oligomères de poids moléculaire adapté, etc...

Avantageusement le liant et le matériau porogène forment deux réseaux connexes dans le matériau.

Afin de créer la porosité on pourra procéder par solubilisation du porogène dans un solvant adapté, par attaque chimique du porogène comme par exemple par hydrolyse, par thermolyse du porogène, etc...

On peut charger la porosité par un matériau de renfort comme une charge solide de granulométrie suffisamment fine pour pénétrer dans la porosité, ou par un procédé sol gel réalisé dans les pores, ou par les deux processus conjointement.

Par granulométrie suffisamment fine on entend en particulier une taille de particule inférieure à l'épaisseur de paroi du matériau final.

Avantageusement le matériau liant peut lui-même être éliminé de façon à ne laisser que le matériau de renfort autour des conduits.

Alternativement la charge solide peut être occluse dans le matériau d'enveloppe étiré et rendue accessible après génération de la porosité dudit matériau.

Parmi les charges solides on citera en particulier les gels de silice, les gels polymériques, ou toute charge pouvant avoir une activité chromatographique.

Avantageusement le matériau poreux contient un copolymère du styrène et du divinyl benzène.

Avantageusement le matériau secondaire d'enveloppe est un gel polymérique du type de celui décrit dans le brevet US N° 4,007,138 déposé par extrusion sur la fibre à étirer avant étirage, puis échange du solvant lourd porogène (voir aussi exemple 1 du brevet en référence). La fibre peut dans ce cas être polymérique et en particulier constituée d'un polymère hydrolysable.

D'une façon générale parmi les polymères hydrolysables utilisables pour créer les conduits capillaires par hydrolyse on pourra citer entre autres les polyesthers dérivés de l'acide glycolique, de l'acide lactique, de la cellulose, et en particulier l'acide polyglycolique ou ses copolymères avec l'acide lactique, avec l'ε-caprolactone ou avec le carbonate de triméthylène (trimethylene carbonate en anglais). On choisit de préférence un polymère dont l'hydrolyse est rapide et sans résidus à une température de 80 à 100°C. L'hydrolyse pourra être accélérée par catalyse acide ou basique.

Dans le présent texte, on calcule le diamètre moléculaire suivant deux façons suivant le poids moléculaire et les caractéristiques de la substance considérée.

Pour les substances présentant une phase gazeuse ou dont on peut calculer les coordonnées du point critique, on utilisera le covolume, terme b de l'équation de Van der Vals, divisé par 4 et par le nombre d'Avogadro, et l'on calculera le diamètre d'une sphère de volume équivalent. On sait en effet que le covolume b est égal à quatre fois le volume moléculaire. Le covolume est aisément accessible à partir des coordonnées critiques du corps considéré.

Pour les macromolécules, les molécules biologiques (protéines, etc...) et les molécules ne présentant pas de phase gazeuse, on utilisera le diamètre hydrodynamique mesuré par diffusion dynamique de la lumière.

Dans le présent texte, on calcule le diamètre moyen et l'écart type du diamètre des conduits par analyse d'image sur une tranche du garnissage parallèle aux conduits.

Lorsque les conduits présentent une variabilité ou écart type sur leur diamètre supérieure le long du garnissage à leur écart type mesuré sur une tranche du garnissage perpendiculaire aux conduits, on mesure le diamètre moyen sur une multiplicité de tranches effectuées le long du garnissage, afin de connaitre le volume de chaque conduit et connaissant celui-ci son diamètre moyen sur la base d'une longueur constante égale à celle du garnissage.

Dans le présent texte, on calcule l'épaisseur moyenne et l'écart type de l'épaisseur des parois des conduits par analyse d'image obtenue par microscopie électronique à balayage sur une tranche du garnissage parallèle aux conduits.

Lorsque les conduits présentent une variabilité ou écart type sur l'épaisseur de paroi supérieure le long du garnissage à leur écart type mesuré sur une tranche du garnissage perpendiculaire aux conduits, on mesure l'épaisseur de paroi moyenne sur une multiplicité de tranches effectuées le long du garnissage, afin de connaitre le volume de chaque paroi et connaissant celui-ci son épaisseur moyenne sur la base d'une longueur constante égale à celle du garnissage.

Les tailles de pores mentionnées dans le présent texte sont mesurées selon deux techniques différentes selon la nature du matériau testé : lorsqu'il s'agit d'un matériau minéral et en particulier de silice, la technique employée est la porosimétrie au mercure pour la macro et mésoporosité, et l'adsorption d'azote pour la microporosité ; lorsqu'il s'agit de matériaux polymériques ou basés sur des matrices minérales recouvertes de gels organiques, on utilise la porosimétrie au mercure pour la macroporosité et la porosimétrie par adsorption d'azote pour la mésoporosité et la microporosité.

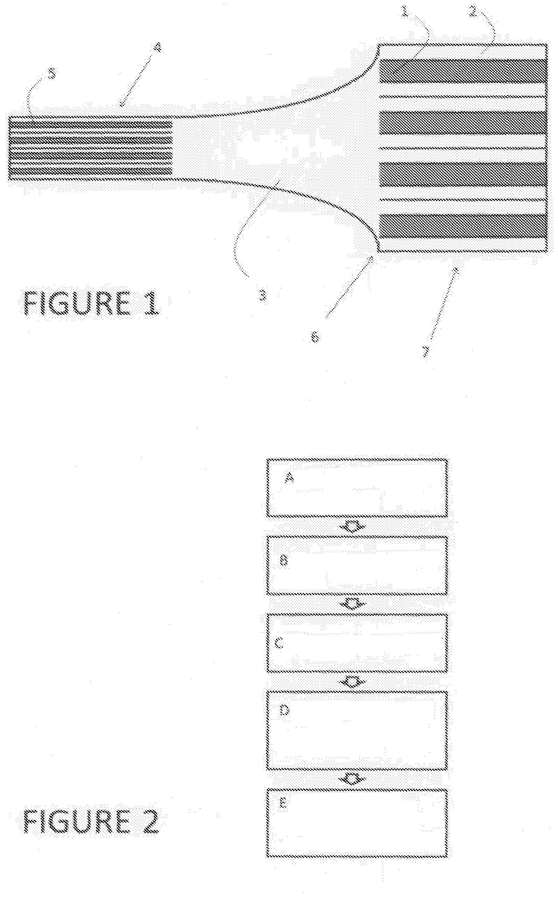

La figure 1 représente un processus d'étirage suivant l'invention. Un faisceau 7 de fibres 1 comprenant un matériau d'enveloppe 2 est étiré à partir d'une région 3 de façon à obtenir un faisceau 4 de plus faible diamètre constitué de fibres plus fines 5. Le faisceau initial peut être compacté de façon à éliminer les espaces libres entre les fibres.

Le faisceau peut être constitué de fibres 1, 2 hexagonales empilées de façon optimalement compacte.

L'étirage peut être réalisé par chauffage de la région 6 du faisceau 7 au-delà du point de fusion, de ramollissement ou de fusion des matériaux de la fibre 1 comprenant l'enveloppe 2.

Un procédé continu se réalise en mettant en place le faisceau 7 en défilement progressif de la droite vers la gauche à vitesse constante, en étirant le faisceau à partir de la région 6 de ce fait continûment alimentée. L'échauffement de la région 6 et la vitesse de défilement du faisceau 7 sont choisis de sorte à ne fondre le matériau de cœur qu'à l'extrémité étirée du faisceau, et à le conserver solide en amont de ce point. On réalise l'étirage à une vitesse constante supérieure à la vitesse d'alimentation du faisceau 7, et l'on refroidit continument la portion 4 de la fibre étirée en-dessous de la température de fusion du matériau de cœur. On conserve ainsi un domaine de volume invariable offert au cœur liquide dans la zone 3 en cours d'étirage sans possibilité de fuite en amont ou en aval. Ceci permet une haute régularité du processus d'étirage et du produit obtenu.

De manière alternative (non illustrée), on peut étirer les fibres, les découper en tronçons puis les assembler en un faisceau, de préférence en les insérant dans un tube dont la paroi est non poreuse.

La figure 2 schématise la suite des étapes d'un procédé suivant l'invention. L'étape A consiste à réaliser un faisceau de fibres enrobées. L'étape B consiste à insérer ce faisceau dans un tube. L'étape A et l'étape B peuvent être réalisées simultanément. L'étape C consiste à étirer l'ensemble constitué par les fibres et le tube pour en réduire le diamètre. L'étape D consiste à éliminer le matériau de cœur des fibres constitué par exemple d'un métal fusible. L'étape E finale consiste à développer la porosité de la paroi des conduits.

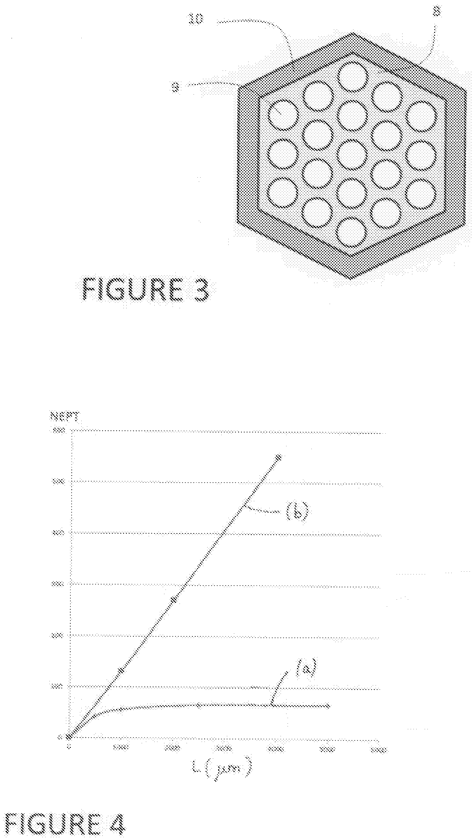

La figure 3 est une vue en coupe du faisceau étiré final obtenu par un procédé suivant l'invention. Celui-ci contient des conduits libres 9 dans une matrice poreuse 8, insérée dans un tube 10 présentant une paroi pleine non poreuse. Les conduits ont été produits par élimination du cœur des fibres 1 étirées. Le faisceau peut être de contour hexagonal et peut être lui-même empilé pour réaliser des garnissages de plus grandes dimensions.

La figure 4 représente un premier résultat des simulations. Les courbes sont tracées avec la longueur L d'une colonne de chromatographie en abscisse et le nombre de plateaux théoriques NEPT en ordonnée.

La courbe (a) représente un garnissage constitué de conduits de diamètre aléatoirement variable suivant une loi statistique gaussienne autour d'une moyenne de 10 $\mu$m avec un écart type de 0,5$\mu$m, pour des parois non poreuses.

La courbe (b) représente le même garnissage avec des parois poreuses présentant 55% de volume poreux, une épaisseur de paroi de 2 $\mu$m et une taille de pore dix fois supérieure au diamètre moléculaire des espèces a séparer.

La courbe (a) qui plafonne à un nombre de plateaux théoriques indépendant de la longueur représente le comportement d'un faisceau de conduits capillaires indépendants à parois pleines. Le diamètre des conduits varie statistiquement suivant une loi normale.

La droite (b) représente le comportement de la même colonne avec des parois poreuses entre les conduits capillaires permettant aux molécules des substances à séparer de diffuser entre les conduits. L'efficacité croît linéairement proportionnellement à la longueur. Cela montre que la diffusion nivelle les différences de comportement entre les conduits.

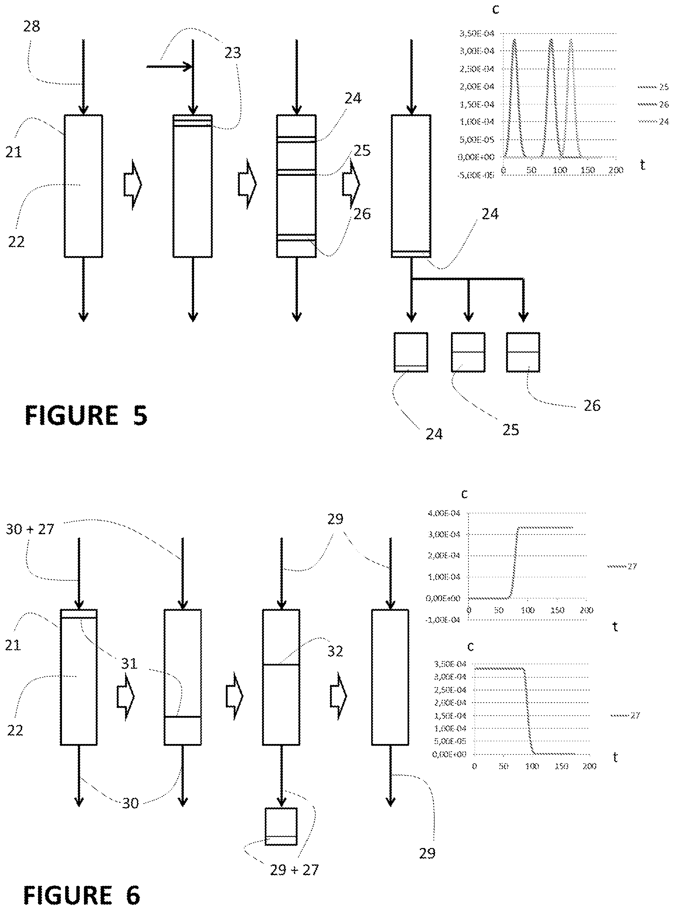

La figure 5 décrit un procédé de chromatographie d'élution. Suivant ce procédé un flux continu de phase mobile 28 de composition et de température éventuellement variables au cours du temps traverse la colonne de chromatographie 21 remplie d'une phase stationnaire 22. Un volume de charge à séparer 23 est injecté dans le flux d'alimentation. Sous l'effet antagoniste de la rétention réversible des espèces chimiques par la phase stationnaire et de l'élution ou entrainement par la phase mobile, les espèces migrent à des vitesses différentes le long de la colonne 21 et se séparent en bandes ou pics d'élutions 24,25,26, etc...

Les espèces séparées sont isolées en fractionnant le flux sortant de la colonne de façon à recueillir chaque bande au moment de sa sortie de la colonne dans le solvant d'élution.

Ce fractionnement peut être temporel dans le cas d'un procédé discontinu ou angulaire dans le cas d'un dispositif annulaire continu. Il peut consister en la séparation d'une fraction de tête et d'une fraction de queue pour un dispositif en lit mobile simulé.

Le chromatogramme représente les pics de concentration des espèces 24, 25, 26 en sortie de colonne en fonction du temps.

La figure 6 décrit un procédé de chromatographie d'affinité permettant la séparation de biomolécules. Un flux continu de solvant 30 contenant la biomolécule à séparer 27 alimente la colonne de chromatographie 21 remplie d'une phase stationnaire 22 présentant une forte affinité pour la biomolécule à séparer. Sous l'effet de cette forte affinité la molécule se fixe sur la phase stationnaire continûment jusqu'à saturation de celle-ci. Cette fixation est quasi irréversible dans les conditions de cette première phase. Le front de progression 31 de la concentration en 27 est dans ce cas un créneau progressant vers la sortie. La colonne est saturée lorsque la concentration en 27 devient significative dans le solvant en sortie de la colonne.

Lors d'une deuxième phase, on change les propriétés (pH, force ionique, etc...) ou la nature du solvant d'élution 29 de façon à diminuer ou éliminer l'affinité de la biomolécule 27 pour la phase stationnaire 22, et à solubiliser la biomolécule dans le solvant 29. La biomolécule 27 est éluée dans le solvant 29 sortant de la colonne 21 jusqu'à épuisement de la quantité présente dans celle-ci. La colonne 21 est alors régénérée et est prête pour un nouveau cycle.

Les chromatogrammes représentent les profils de concentration de l'espèce 27 en sortie de colonne en fonction du temps, lors des phases de fixation puis d'élution.

Avantageusement la taille des pores du milieu continu est supérieure à 2 fois le diamètre moléculaire des espèces à séparer.

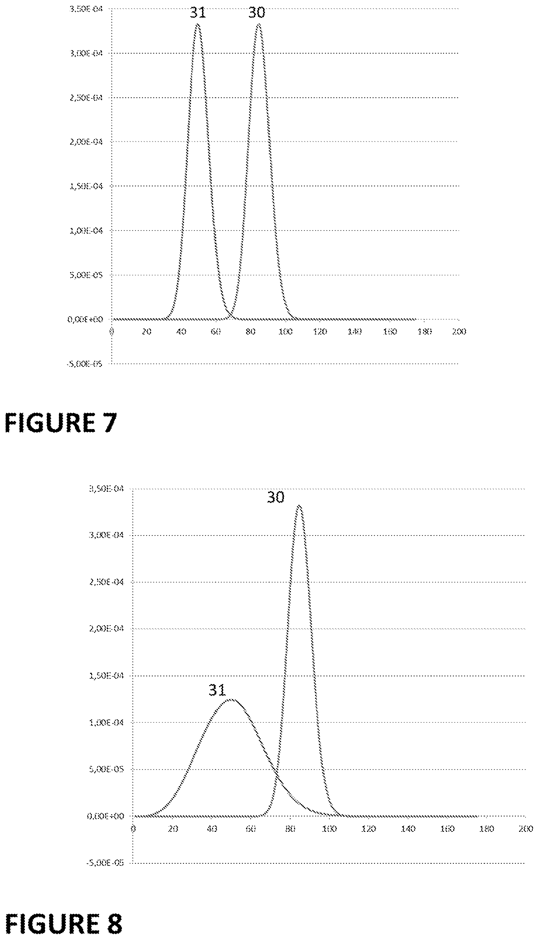

Cette caractéristique très importante permet d'utiliser le garnissage dans des conditions d'efficacité optimales. Ceci est illustré par les figures 7 et 8.

La figure 7 représente schématiquement une simulation sur ordinateur de la séparation de deux espèces chimiques sur un garnissage multicapillaire à parois poreuses dont le diamètre des pores communicantes est supérieur à deux fois le diamètre moléculaire de ces espèces. Les canaux capillaires du garnissage présentent une variabilité statistique sur leur diamètre. Ces diamètres sont répartis sur une courbe de gauss dont l'écart type est égal à 5% de leur diamètre moyen.

Ces espèces sont par exemple un sel minéral comme du chlorure de sodium 30 et un peptide 31 dissous dans l'eau.

On constate une bonne séparation des deux pics d'élution permettant de séparer les deux espèces.

La figure 8 représente schématiquement une simulation sur ordinateur de la séparation des mêmes espèces chimiques sur un garnissage présentant des caractéristiques dimensionnelles identiques mais dont le diamètre des pores communicantes est supérieur à deux fois le diamètre moléculaire de l'espèce 30 et est inférieur à deux fois le diamètre moléculaire de l'espèce 31.

On constate que les deux pics se recouvrent et ne permettent plus une séparation efficace et complète des deux espèces. Cet effet est dû au fait que la nature poreuse du gel permet l'équilibrage des concentrations entre les canaux par diffusion moléculaire dans le cas de l'espèce 30 et ne le permet plus dans le cas de l'espèce 31. De ce fait l'espèce 31 est sujette à un important étalement supplémentaire du à la nature irrégulière des diamètres des canaux capillaires qui n'est plus compensée par la diffusion moléculaire entre les canaux adjacents.

Par conséquent, pour optimiser les performances de la séparation en présence de deux espèces (ou davantage) présentant des pics consécutifs, on fera en sorte que la taille des pores connexes soit supérieure à deux fois le diamètre moléculaire de chacune desdites espèces.

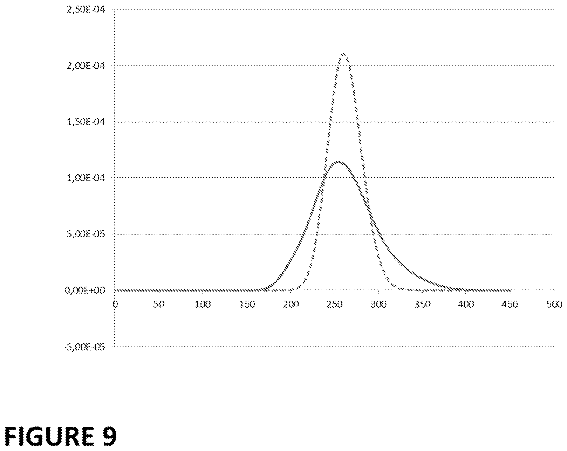

Dans le cas de la figure 9, la colonne contient des conduits dont les diamètres sont répartis aléatoirement suivant une loi gaussienne dont l'écart type correspond à 5% du diamètre moyen des conduits.

On constate que lorsque la diffusion a lieu (courbe en pointillés) le nombre de plateaux théorique de la colonne est de 178. Lorsque la diffusion est empêchée (courbe en trait plein), le nombre de plateaux théorique de la colonne n'est plus que de 50, ce qui montre que la colonne est considérablement moins performante.

Exemple 1:

Un faisceau de 100 tubes capillaires de 200 mm de long en un verre borosilicaté de 0,20 mm de diamètre externe et 0,1 mm de diamètre interne sont empilés suivant une maille carrée en un faisceau de 2 mm de côté de section carrée.

Le verre borosilicaté à une composition molaire de 63% de $SiO_2$, 7% de $Na_2O$, 30 % de $B_2O_3$.

Une extrémité de ce faisceau est chauffée à 750 °C et le faisceau est étiré avec un facteur d'allongement linéaire de 30 fois.

200 mm du filament résultant sont recuits à 570 °C durant quatre heures puis refroidis lentement.

On fait ensuite percoler au travers des conduits de l'acide chlorhydrique 2N de façon à dissoudre la phase soluble et libérer la porosité.

Le garnissage est ensuite lavé à l'eau distillée et séché.

Exemple 2:

Un faisceau de 91 tubes capillaires de 200 mm de long en un verre borosilicaté de 0,20 mm de diamètre externe et 0,1 mm de diamètre interne sont remplis d'indium liquide à 180 °C et refroidis à la température ambiante.

Le verre borosilicaté à une composition molaire de 63% de $SiO_2$, 7% de $Na_2O$, 30 % de $B_2O_3$.

Les tubes sont empilés dans un tube hexagonal de verre sodocalcique de 1.2 mm de côté interne et de 2,5 mm de côté externe. Une extrémité de ce faisceau est chauffée à 750 °C et le barreau est étiré avec un facteur d'allongement linéaire de 30 fois.

200 mm du filament résultant sont recuits à 570 °C durant quatre heures puis refroidis lentement.

On chauffe le filament à 180°C et on élimine l'indium liquide sous pression. On fait ensuite percoler au travers des conduits de l'acide chlorhydrique 2N de façon à dissoudre la phase soluble et libérer la porosité.

Le garnissage est ensuite lavé à l'eau distillée et séché.

Exemple 3:

2 parties de polypropylène ayant un MI de 0,8g/10 mn et une partie et demi de tetrahydronaphtalène sont mélangés en un mélange homogène à une température d'environ 160°C et après refroidissement à 140°C sont mélangés à une partie de styrène contenant 8% en poids de dinvinylbenzène. On ajoute au mélange 0,5% en poids de p-methoxyphenol comme inhibiteur de polymérisation et 0,1 % en poids de di t-butyl hydroperoxyde comme initiateur de polymérisation. Le mélange est poursuivi 5 mn. Le mélange est ensuite polymérisé dans un réacteur sous pression à 180°C durant 8 heures.

Des filaments de Caprosyn (marque de Tyco Healthcare) sont fondus et le liquide est coextrudé à 180°C avec le mélange issu des opérations précédentes de façon à obtenir un fil de 100 μm de diamètre environ comprenant une âme de caprosyn de 50 μm.

Le filament est bobiné dans une préforme de section carrée de 2mmx2mm sur 200 mm de long ménagée dans une plaque d'acier de 200 mm de long et 5 mm d'épaisseur de façon à remplir ce canal de façon ordonnée. Le bobinage est compacté dans le canal par une presse de façon à réaliser un barreau millimétrique compact.

Ce barreau est extrait de son logement métallique et étiré en chauffant continument une de ses extrémités à 160°C et en l'étirant jusqu'à un diamètre externe de 100 μm environ.

200 mm du multifilament ainsi obtenu sont fixés dans une rainure de même largeur (100 μm) réalisée dans une plaque d'acier inoxydable 18-8.

La plaque d'acier portant le multifilament est soumise à un bain de méthanol bouillant de façon à extraire le tétrahydronaphtalène et libérer la porosité autour des filaments de caprosyn.

Le multifilament est ensuite soumis à l'action d'une solution de soude N dans l'eau durant 24 h à 100 °C de façon à libérer les conduits.

Le matériau résultant est lavé à l'eau distillée de façon à épuiser les résidus acides.

## REFERENCES

WO 2011/114017
US 5,234,594
Phase Separation In Glass, O.V. MAZURIN et E.A. PORAI-KOSHIT, 1984, North Holland éditeur, p. 310
US 4,007,138

## Revendications

1. Procédé de fabrication d'un garnissage poreux pour la chromatographie comprenant une pluralité de conduits capillaires s'étendant dans la direction de circulation d'une phase mobile liquide, gazeuse ou supercritique au sein dudit garnissage,

ledit procédé comprenant les étapes suivantes :

- on assemble un faisceau de fibres élémentaires, lesdites fibres comprenant un cœur en un matériau solide ou liquide, et une enveloppe en un matériau étirable adapté pour être rendu poreux, le matériau de l'enveloppe étant un verre borosilicaté ou un polymère thermoplastique comprenant un matériau porogène et un liant,
- on étire ledit faisceau de façon à réduire le diamètre desdites fibres,
- on réalise une matrice poreuse autour du cœur des fibres étirées, la réalisation de ladite matrice poreuse comprenant une décomposition spinodale du verre borosilicaté ou une attaque chimique ou une solubilisation du matériau porogène du polymère, ladite matrice poreuse comprenant au moins une population de pores connexes, c'est-à-dire communiquant entre eux, reliant entre eux les conduits formés par le cœur de chaque fibre étirée, l'épaisseur moyenne de matrice poreuse entre deux conduits adjacents, déterminée par analyse d'image obtenue par microscopie électronique à balayage sur une tranche du garnissage parallèle aux conduits, étant inférieure au diamètre moyen des conduits déterminé par analyse d'image sur une tranche du garnissage parallèle aux conduits, de manière préférée inférieure à la moitié du diamètre moyen des conduits,
- on élimine le matériau de cœur de façon à laisser les conduits libres dans la matrice poreuse.

2. Procédé selon la revendication 1, **caractérisé en ce que** ce matériau de cœur est un métal.

3. Procédé selon l'une des revendications 1 à 2, dans lequel le cœur des fibres est en un matériau solide, ledit procédé comprenant au moins les étapes suivantes :

- mise en place du faisceau de fibres en défilement dans un dispositif d'étirage dans lequel :

• on chauffe une région de chaque fibre de sorte à rendre le matériau d'enveloppe étirable dans cette région et à fondre le matériau de cœur dans ladite région, ledit matériau de cœur restant solide dans la portion de la fibre en amont de ladite région, et
• on étire la portion de chaque fibre en aval de ladite région tout en refroidissant ladite portion en-dessous de la température de fusion du matériau de cœur,

- élimination du matériau de cœur et transformation du matériau de l'enveloppe par décomposition spinodale du verre borosilicaté ou une attaque chimique ou une solubilisation du matériau porogène du polymère, de sorte à former des conduits capillaires s'étendant au travers de la matrice poreuse comprenant au moins une population de pores connexes reliant entre eux les conduits, l'épaisseur moyenne de matrice poreuse entre deux conduits adjacents étant inférieure au diamètre moyen des conduits, de préférence inférieure à la moitié du diamètre moyen des conduits.

**4.** Procédé de fabrication d'un garnissage poreux pour la chromatographie comprenant une pluralité de conduits capillaires s'étendant dans la direction de circulation d'une phase mobile liquide, gazeuse ou supercritique au sein dudit garnissage,
ledit procédé comprenant les étapes suivantes :

- on assemble un faisceau de fibres élémentaires, lesdites fibres comprenant un cœur rempli d'un gaz et une enveloppe en un matériau étirable adapté pour être rendu poreux, le matériau de l'enveloppe étant un verre borosilicaté ou un polymère thermoplastique comprenant un matériau porogène et un liant,
- on étire ledit faisceau de façon à réduire le diamètre desdites fibres,
- on réalise une matrice poreuse autour du cœur des fibres étirées, la réalisation de ladite matrice poreuse comprenant une décomposition spinodale du verre borosilicaté ou une attaque chimique ou une solubilisation du matériau porogène du polymère, ladite matrice poreuse comprenant au moins une population de pores connexes, c'est-à-dire communiquant entre eux, reliant entre eux les conduits, l'épaisseur moyenne de matrice poreuse entre deux conduits adjacents, déterminée par analyse d'image obtenue par microscopie électronique à balayage sur une tranche du garnissage parallèle aux conduits, étant inférieure au diamètre moyen des conduits déterminé par analyse d'image sur une tranche du garnissage parallèle aux conduits, de manière préférée inférieure à la moitié du diamètre moyen des conduits.

**5.** Procédé selon la revendication précédente, **caractérisé en ce que** le cœur des fibres contient de l'air ou de l'azote.

**6.** Procédé selon la revendication 1, **caractérisé en ce que** le diamètre moyen des conduits est inférieur à 30 $\mu$m, et de préférence inférieur à 10 $\mu$m.

**7.** Procédé selon l'une quelconque des revendications précédentes **caractérisé en ce que** l'on étire le faisceau après l'avoir inséré dans un tube en un matériau non poreux étirable simultanément audit faisceau et définissant une paroi du garnissage, ladite paroi restant non poreuse à l'issue de la transformation du matériau d'enveloppe.

**8.** Procédé selon l'une quelconque des revendications précédentes **caractérisé en ce que** ledit garnissage présente un volume poreux supérieur à 30% de son volume total, de préférence supérieur à 40% de son volume total, et encore plus préférentiellement supérieur à 50% de son volume total mesuré à l'exclusion du volume des conduits.

**Patentansprüche**

**1.** Verfahren zur Herstellung einer porösen Packung für die Chromatographie, umfassend eine Vielzahl von Kapillarleitungen, die sich in der Zirkulationsrichtung einer mobilen flüssigen, gasförmigen oder superkritischen Phase innerhalb der Packung erstrecken,
wobei das Verfahren die folgenden Schritte umfasst:

- Verbinden eines Bündels elementarer Fasern, wobei die Fasern einen Kern aus einem festen oder flüssigen Material und einen Mantel aus einem ziehbaren Material umfassen, das geeignet ist, porös gemacht zu werden, wobei das Material des Mantels ein Borsilikatglas oder ein thermoplastisches Polymer ist, das ein porenbildendes Material und ein Bindemittel umfasst,

- Ziehen des Bündels derart, dass der Durchmesser der Fasern reduziert wird,
- Herstellen einer porösen Matrix um den Kern der gezogenen Fasern, wobei die Herstellung der porösen Matrix eine spinodale Zersetzung des Borsilikatglases oder einen chemischen Angriff oder eine Solubilisierung des porenbildenden Materials des Polymers umfasst, wobei die poröse Matrix mindestens eine Population zusammenhängender, d. h. untereinander kommunizierender Poren umfasst, die zwischen sich die von dem Kern jeder gezogenen Faser gebildeten Leitungen verbunden, wobei die mittlere Dicke der porösen Matrix zwischen zwei benachbarten Leitungen, bestimmt durch Analyse eines durch Rasterelektronenmikroskopie erhaltenen Bildes auf einem zu den Leitungen parallelen Wafer der Packung, kleiner als der mittlere Durchmesser der Leitungen, bestimmt durch Bildanalyse auf einem zu den Leitungen parallelen Wafer der Packung, vorzugsweise kleiner als die Hälfte des mittleren Durchmessers der Leitungen ist,
- Entfernen des Kernmaterials derart, dass die Leitungen in der porösen Matrix frei gelassen werden.

2.  Verfahren nach Anspruch 1, **dadurch gekennzeichnet, dass** dieses Kernmaterial ein Metall ist.

3.  Verfahren nach einem der Ansprüche 1 bis 2, wobei der Kern der Fasern aus einem festen Material ist, wobei das Verfahren mindestens die folgenden Schritte umfasst:

    - Bereitstellen des Faserbündels in einer Ziehvorrichtung durchlaufend, in welcher:

        • eine Region jeder Faser derart erwärmt wird, dass das Mantelmaterial in dieser Region ziehbar wird und das Kernmaterial in der Region schmilzt, wobei das Kernmaterial in dem der Region vorgelagerten Abschnitt der Faser fest bleibt, und
        • Ziehen des der Region nachgelagerten Abschnitts jeder Faser bei Abkühlen des Abschnitts unter die Schmelztemperatur des Kernmaterials,

    - Entfernen des Kernmaterials und Umwandeln des Materials des Mantels durch spinodale Zersetzung des Borsilikatglases oder einen chemischen Angriff oder eine Solubilisierung des porenbildenden Materials des Polymers, so dass Kapillarleitungen gebildet werden, die sich durch die poröse Matrix erstrecken, umfassend mindestens eine Population zusammenhängender Poren, die die Leitungen untereinander verbinden, wobei die mittlere Dicke der porösen Matrix zwischen zwei benachbarten Leitungen kleiner als der mittlere Durchmesser der Leitungen, vorzugsweise kleiner als die Hälfte des mittleren Durchmessers der Leitungen ist.

4.  Verfahren zur Herstellung einer porösen Packung für die Chromatographie, umfassend eine Vielzahl von Kapillarleitungen, die sich in der Zirkulationsrichtung einer mobilen flüssigen, gasförmigen oder superkritischen Phase innerhalb der Packung erstrecken,
    wobei das Verfahren die folgenden Schritte umfasst:

    - Verbinden eines Bündels elementarer Fasern, wobei die Fasern einen mit einem Gas gefüllten Kern und einen Mantel aus einem ziehbaren Material umfassen, das geeignet ist, porös gemacht zu werden, wobei das Material des Mantels ein Borsilikatglas oder ein thermoplastisches Polymer ist, das ein porenbildendes Material und ein Bindemittel umfasst,
    - Ziehen des Bündels derart, dass der Durchmesser der Fasern reduziert wird,
    - Herstellen einer porösen Matrix um den Kern der gezogenen Fasern, wobei die Herstellung der porösen Matrix eine spinodale Zersetzung des Borsilikatglases oder einen chemischen Angriff oder eine Solubilisierung des porenbildenden Materials des Polymers umfasst, wobei die poröse Matrix mindestens eine Population zusammenhängender, d. h. untereinander kommunizierender Poren umfasst, die zwischen sich die Leitungen verbinden, wobei die mittlere Dicke der porösen Matrix zwischen zwei benachbarten Leitungen, bestimmt durch Analyse eines durch Rasterelektronenmikroskopie erhaltenen Bildes auf einem zu den Leitungen parallelen Wafer der Packung, kleiner als der mittlere Durchmesser der Leitungen, bestimmt durch Bildanalyse auf einem zu den Leitungen parallelen Wafer der Packung, vorzugsweise kleiner als die Hälfte des mittleren Durchmessers der Leitungen ist.

5.  Verfahren nach vorangehendem Anspruch, **dadurch gekennzeichnet, dass** der Kern der Fasern Luft oder Stickstoff enthält.

6.  Verfahren nach Anspruch 1, **dadurch gekennzeichnet, dass** der mittlere Durchmesser der Leitungen kleiner als

30 μm und vorzugsweise kleiner als 10 μm ist.

**7.** Verfahren nach einem der vorangehenden Ansprüche, **dadurch gekennzeichnet, dass** das Bündel nach dem Einsetzen in ein Rohr aus einem nicht porösen, mit dem Bündel gleichzeitig ziehbaren Material gezogen wird und das eine Wand der Packung definiert, wobei die Wand nach Abschluss der Umwandlung des Materials des Mantels nicht porös bleibt.

**8.** Verfahren nach einem der vorangehenden Ansprüche, wobei die Packung ein poröses Volumen von über 30 % ihres Gesamtvolumens, vorzugsweise von über 40 % ihres Gesamtvolumens und noch vorzugsweiser von über 50 % ihres Gesamtvolumens aufweist, gemessen bei Ausschluss des Volumens der Leitungen.

**Claims**

**1.** Method for manufacturing a porous packing for chromatography which comprises a plurality of capillary channels which extend in the direction of flow of a liquid, gaseous or supercritical mobile phase within said packing, said method comprising the following steps:

- a bundle of elementary fibres is assembled, said fibres comprising a core made of a solid or liquid material, and a shell made of a drawable material adapted to be made porous, the shell material being a borosilicate glass or a thermoplastic polymer comprising a pore-forming material and a binder,
- said bundle is drawn in order to reduce the diameter of said fibres,
- a porous matrix is made around the core of the drawn fibres, the manufacture of said porous matrix comprising a spinodal decomposition of the borosilicate glass or a chemical attack or solubilisation of the pore-forming material of the polymer, said porous matrix comprising at least one population of connected pores interconnecting the channels formed by the core of each drawn fibre, where the mean thickness of the porous matrix between two adjacent channels, determined by scanning electron microscopy image analysis on a section of the packing parallel to the channels, is less than the mean diameter of the channels determined by image analysis on a section of the packing parallel to the channels, preferably less than half the mean diameter of the channels,
- the core material is removed so as to leave free channels in the porous matrix.

**2.** Method according to claim 1, **characterised in that** the core material is a metal.

**3.** Method according to one of claims 1 to 2, wherein the core material of the fibres is a solid material, said method comprising at least the following steps:

- insertion of the bundle of fibres fed continuously into a drawing device wherein:

• a region of each fibre is heated so as to make the shell material drawable in this region and to melt the core material in said region, where said core material remains solid in the portion of the fibre upstream of said region, and
• the portion of each fibre downstream of said region is drawn whilst said portion is cooled to below the fusion temperature of the core material,

- removal of the core material and transformation of the shell material by spinodal decomposition of the borosilicate glass or chemical attack or solubilisation of the pore-forming material of the polymer so as to form capillary channels extending through the porous matrix which comprises at least one population of connected pores interconnecting the channels, where the mean thickness of the porous matrix between two adjacent channels is less than the mean diameter of the channels, preferably less than half the mean diameter of the channels.

**4.** Method for manufacturing a porous packing for chromatography which comprises a plurality of capillary channels which extend in the direction of flow of a liquid, gaseous or supercritical mobile phase within said packing, said method comprising the following steps:

- a bundle of elementary fibres is assembled, said fibres comprising a core filled with a gas and a shell made of a drawable material adapted to be made porous, the shell material being a borosilicate glass or a thermoplastic polymer comprising a pore-forming material and a binder,

- said bundle is drawn in order to reduce the diameter of said fibres,
- a porous matrix is produced around the core of the drawn fibres, the manufacture of said porous matrix comprising a spinodal decomposition of the borosilicate glass or a chemical attack or solubilisation of the pore-forming material of the polymer, said porous matrix comprising at least one population of connected pores interconnecting the channels, where the mean thickness of the porous matrix between two adjacent channels, determined by scanning electron microscopy image analysis on a section of the packing parallel to the channels, is less than the mean diameter of the channels determined by image analysis on a section of the packing parallel to the channels, preferably less than half the mean diameter of the channels.

5. Method according to the preceding claim, **characterised in that** the core of the fibres contains air or nitrogen.

6. Method according to claim 1, **characterised in that** the mean diameter of the channels is less than 30 $\mu$m, and preferably less than 10 $\mu$m.

7. Method according to any one of the preceding claims, **characterised in that** the bundle is drawn after it has been inserted into a tube made of a non-porous material which can be drawn simultaneously with said bundle and which defines a wall of the packing, where said wall remains non-porous after the transformation of the shell material.

8. Method according to any one of the preceding claims **characterised in that** said packing has a pore volume greater than 30% of its total volume, preferably greater than 40% of its total volume, and yet more preferably greater than 50% of its total measured volume excluding the volume of the channels.

FIGURE 1

FIGURE 2

FIGURE 3

FIGURE 4

**FIGURE 5**

**FIGURE 6**

**FIGURE 7**

**FIGURE 8**

**FIGURE 9**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2011114017 A
- US 5234594 A, Tonucci
- US 20080026188 A
- US 4007138 A

**Littérature non-brevet citée dans la description**

- **O.V. MAZURIN ; E.A. PORAI-KOSHIT.** Phase Separation In Glass. 1984, 310